# EUROPEAN PATENT SPECIFICATION

(11) **EP 1 642 274 B1**
(45) Date of publication and mention of the grant of the patent: **21.05.2008**
(21) Application number: 04744396.5
(22) Date of filing: 24.06.2004
(51) Int. Cl.: G11B 7/12

(54) **AN OPTICAL DISK DRIVE**
OPTISCHES PLATTENLAUFWERK
UNITE D'ENTRAINEMENT DE DISQUE OPTIQUE

(30) Priority: 26.06.2003 EP 03076992
(43) Date of publication of application: 05.04.2006
(73) Proprietor: Koninklijke Philips Electronics N.V., 5621 BA Eindhoven (NL)
(72) Inventor: VAN LIEMPD, Christinus, A., P., NL-5656 AA Eindhoven (NL); VAN RENS, Antonia, C., NL-5656 AA Eindhoven (NL); VAN MIL, Job, F., P., NL-5656 AA Eindhoven (NL)
(74) Representative: van Oudheusden-Perset, Laure E.
(86) International application number: PCT/IB2004/050991
(87) International publication number: WO 2004/114290

(56) References cited:
- EP-A- 0 301 643
- WO-A-03/056550

## Description

The invention relates in general to an optical disk drive, and more specifically to an optical disk drive comprising an electronic unit comprising a first electronic circuit, an optical pick-up unit that is movably assembled with respect to the electronic unit and comprises light generation means for writing/reading data to/from an optical disk, and comprising a second electronic circuit having a plurality of light sensors for receiving reflected light from the disk which originates from the light generation means, each light sensor having an output for delivering an electrical signal; and coupling means for coupling the second electronic circuit to the first electronic circuit for the transfer of information between the first and second electronic circuits.

The invention also relates to a playback/recording apparatus comprising an optical disk drive.

EP-A-301643 discloses the features of the preamble of claim 1.

As is commonly known, an optical storage disk comprises at least one track, either in the form of a continuous spiral or in the form of multiple concentric circles, of storage space where information may be stored in the form of a data pattern. Optical disks may be of the read-only type, where information is recorded during manufacturing, which information can be read by a user. The optical storage disk may also be of a a writable type, where information may be stored by a user. For writing information in the storage space of a writable optical storage disk, an optical disk drive comprises, on the one hand, rotating means for receiving and rotating an optical disk, and on the other hand light generation means for generating an optical beam, typically a laser beam, and for scanning the storage track with said laser beam. Since the technology of optical disks in general and the way in which information can be stored in an optical disk are commonly known, it is not necessary here to describe this technology in great detail. For understanding the present invention, it is sufficient to mention that the laser beam is modulated so as to cause a pattern of locations where properties of the disk material have changed, said pattern corresponding to coded information. During recording of an optical disk, a laser driver controls the laser by means of a drive current. This drive current, and consequently the light emitted by the laser, follows a desired pattern determined by the coded information.

The optical disk drive comprises a large amount of mechanics and electronics. The major part of the electronics is placed in the electronic unit in the form of a so-called printed circuit board. The printed circuit board will be further denoted as PCB. The PCB fixed to a housing of the electronic unit is in one way or another. The optical pick-up unit, which will be further denoted as OPU, is movably assembled with respect to the housing and thus also with respect to the PCB. The OPU comprises inter alia the laser, the plurality of light sensors which are usually implemented by light-sensitive photodiodes, a lens system, and part of the electronics of the disk drive. The lens system ensures correct focusing of the laser light on the surface of the disk, and the photodiodes convert the reflected light into electrical signals. The OPU can be moved in horizontal direction by a swing arm or more sledge. Alternative means for moving the OPU may also be applied. Furthermore, the laser and/or lens system can be moved in vertical direction for the purpose of focusing. Owing to the movability of the OPU, the light emitted by the laser can be positioned in order to radiate light onto desired positions of the disk. The use of more than one photodiode renders it possible not only to retrieve an HF-signal from the disk from which the data can be retrieved, but also to measure the deviation and hence to correct the position of the sledge (or other means) and to control the vertical movement of the laser or the lens system. Thus tracking and focusing are also performed with the information (the electrical currents) received from the photodiodes. The tracking is usually denoted as " push-pull" radial tracking. The push-pull tracking is generally known and well described in known literature. Therefore a detailed description of the principles of push-pull is not necessary. In respect of the present invention it suffices to mention that often use is made of the so called three-spot radial tracking push-pull system, which will be further denoted as "3-spot push pull". The 3-spot push pull is also well known from literature. When using the 3-spot push pull, three spots are generated by the addition of a spatial grating in the light path created by the laser. Three spots are also reflected back to the photodiodes. So usually three segments of photodiodes are used for getting accurate tracking. Normally each segment comprises several photodiodes. Eight separate electrical currents are delivered by the photodiodes in many situations. These currents are transferred to the electronics on the PCB for further processing. Since these currents are quite weak, they are usually first amplified before being transferred to the PCB via the coupling means. In this way these electrical currents are less disturbed by unwanted signals generated somewhere in the electronics which are picked up by the coupling means. Thus by first amplifying the weak electrical signals, a higher signal-to-noise ratio can be achieved. This results in a more reliable control of e.g. the push-pull tracking.

Since the OPU is movable with respect to the PCB, the coupling means cannot be formed by mechanically stiff electrical connections. So special coupling means must be applied, which are not very cheap. There is accordingly a tendency to try and minimize the number of electrical wires within the coupling means.

It is thus an object of the invention to reduce the number of electrical connections between the OPU and the PCB.

To achieve the object of the invention, the optical disk drive as defined in the opening paragraph is characterized in that in a normal operational mode a number of the electrical signals are combined by the second electronic circuit, these combined electrical signals and the remaining uncombined electrical signals being transferred via the coupling means to the first electronic circuit, and that in a test mode all or part of the electrical signals are separately processed by the second electronic circuit.

In the known optical disk drive all electrical signals from the second electronic circuit, which is part of the OPU, are transferred via the coupling means to the first electronic circuit, which is part of the PCB, because in a test mode all these electrical signals are needed separately by a so-called test circuit within the first electronic circuit. The test circuit is only active in the test mode, which is only used during the manufacture of the optical disk drive. In this test mode, a position (including angles) of the photodiodes with respect to the reflected light from a disk is defined (calibration). So this test mode will never be used again during normal operation by the users.

The invention is based on the recognition that not all electrical signals are needed for the retrieval of the HF signal, the tracking, and the focus control since some of them are summed in the first electronic circuit. Thus moving the test circuit from the first electronic circuit on the PCB to the second electronic circuit on the OPU then renders it possible to perform the summation already in the second electronic circuit, so that a smaller number of electrical signals have to be transferred via the coupling means to the PCB. The test circuit can be very easily implemented in the second electronic circuit because it is usually implemented in an integrated circuit anyway. Therefore, it does not have the disadvantage of a significant increase in weight of the OPU. An increase in weight could be disadvantageous for the mechanical construction of the OPU and for the power consumption of the OPU. So it is only in the test mode that all electrical signals need separate amplification by the amplifiers. The invention has the additional advantage that in the normal mode, in which some electrical currents from the photodiodes are combined (summed), part of the amplifiers can be switched off. This results in a lower power consumption by the amplifiers. Thus, for example, only 6 out of a total of 8 electrical currents are transferred via the coupling means, and 2 out of a total of 8 amplifiers are switched off in the normal mode.

As defined in claim 2, the coupling means are preferably implemented by a flexible electrical connection device. This is because the OPU must be movable with respect to the PCB.

As defined in claim 3, the flexible electrical connection device may be a flexible printed circuit.

An embodiment of the optical disk drive is characterized in that during operation the light generation means generates a main light spot and a first and a second satellite light spot, in that the plurality of light sensors is subdivided into a main part for receiving light which originates from the main light spot, a first satellite part for receiving light which originates from the first satellite light spot, and a second satellite part for receiving light which originates from the second satellite light spot, and in that the combined electrical signals are combinations of electrical signals corresponding to the first and the second satellite parts of the light sensors.

The 3-spot push pull system mentioned above is used for this. Since some of the electrical currents corresponding to the satellite light spots can be summed in the normal mode, the number of electrical currents to be transferred via the coupling means is reduced. The summation can be accomplished by activating switches which short-circuit an input of an amplifier with an input of another amplifier.

An embodiment of the optical disk drive is characterized in that the second electronic circuit comprises a BUS-system for controlling the gain or gains of at least one of the amplifiers by means of at least one control bit of the BUS-system, and in that additional information can be sent via the BUS-system for switching off or putting into standby part of the amplifiers by the fact that the amplitude of the at least one control bit (which may be a voltage or a current) can be made greater than is necessary for controlling the gain or gains of at least one of the amplifiers. Via the BUS-system, the gain of each amplifier can be set independently of the others. This is advantageous because the first electronic circuit on the PCB may need to process the electrical currents with different gain values. This may be caused, for example, by the fact that the electrical currents corresponding to the satellite light spots are usually much weaker than the electrical currents corresponding to the main light spot. The sending of the additional information via the BUS-system for switching off or putting into standby part of the amplifiers in the abovementioned manner is advantageous because otherwise the number of control bits used for the BUS-system would have to be larger.

An embodiment of the optical disk drive is characterized in that the BUS-system uses a three-level logic. Usually a binary-level logic is applied for a BUS-system. With a three level logic a smaller number of control bits is necessary. In this embodiment the sending of the additional information via the BUS-system for switching off or putting into standby part of the amplifiers, as mentioned in the previous embodiment, can still be accomplished in that the amplitude of the at least one control bit can be made greater than is necessary for controlling the gain or gains of at least one of the amplifiers. Alternatively, as defined in claim 8, the additional information is sent via the BUS-system without making the amplitude of the at least one control bit greater than usual. This is possible because more information can be sent per electrical connection of the BUS-system, with a three-level logic than with a binary-level logic.

An embodiment of the optical disk drive is characterized in that at least one power supply line of the at least one amplifier is also used for sending the additional information by a temporary increase or decrease in the voltage level on the at least one power supply line. If the so-called V_{DD} or V_{SS} power line of an amplifier is used for switching off or putting into standby part of the amplifiers, the number of electrical wires of the BUS-system can be smaller, especially in the situation where a binary-level logic is applied. For example, the lowering of the voltage at the V_{SS} power line of an amplifier can only be temporary because otherwise the corresponding amplifier cannot perform its normal amplifying task when needed. The V_{SS} power line may be, for example, a common V_{SS} power line for all the amplifiers. Alternatively, the same can be accomplished by a V_{DD} power line. In the latter case the voltage on the V_{DD} power line should be temporarily increased. Since the voltage on a power line of an amplifier may only be decreased or increased temporarily, the corresponding amplifiers (the ones needed for the test mode) must be provided with some kind of memory means, e.g. a latch.

The invention will be described in more detail with reference to the accompanying drawings, in which:
Figure 1 shows a schematic drawing of an OPU;
Figure 2 shows part of tracks radiated by a main spot and two satellites spots;
Figure 3 shows light-sensitive photodiodes for generating electrical currents in order to retrieve the HF-signal, focus control, and 3-spot push-pull tracking control;
Figure 4 shows part of an optical disk drive; and
Figure 5 shows an embodiment of the invention.

Parts or elements having like functions or purposes bear the same reference symbols in these Figures.

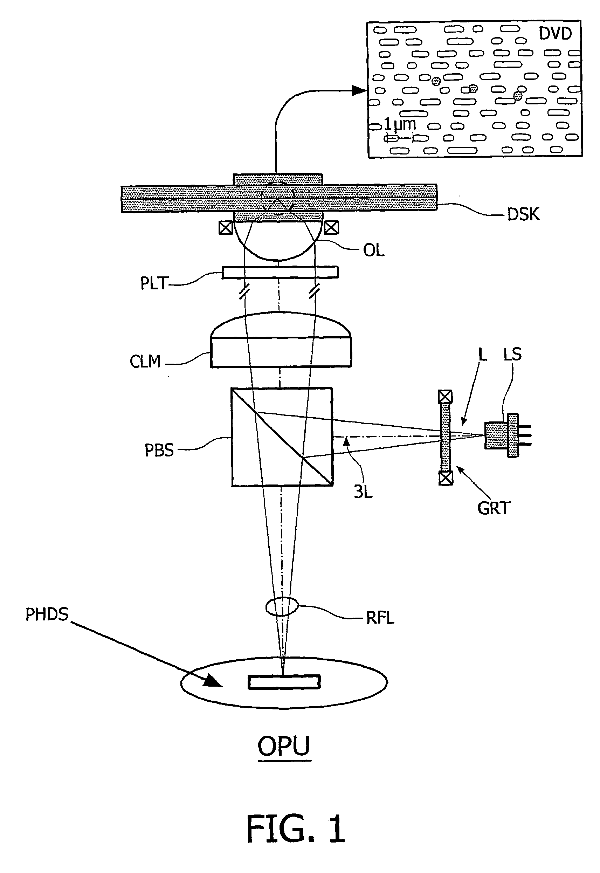

Figure 1 shows an example of a schematic drawing of an OPU. The OPU comprises a laser LS, a spatial grating GRT, a polarized beam splitter PBS, a collimator (lens) CLM, a 1/4 λ plate PLT, an objective lens OL, and light-sensitive photodiodes PHDS. An optical disk DSK is also shown.

The laser generates a very small light beam L which passes through the grating GRT to form three light beams 3L. The three light beams 3L are necessary in the situation where a so-called 3-spot push-pull tracking control is desired. (Otherwise the grating GRT can be left out.) The three light beams 3L are mirrored towards the collimator CLM by the polarized beam splitter PBS. The diverging light beams issuing from the collimator CLM are changed into parallel (that is to say non-diverging and non-converging) light beams. The parallel light beams pass through the 1/4 λ plate PLT, which shift the polarization of the light beams by approximately 90 degrees. The objective lens OL converges the light beams onto the desired positions of the optical disk DSK which is, for example, a DVD. (Depending on the design, it is sometimes possible to leave out the collimator CLM by choosing a higher diopter value for the objective lens OL.)

Light reflected from the disk DSK, which is now modulated by the information on the disk DSK, passes through the 1/4 λ plate PLT for shifting the polarization of the light by approximately 90 degrees. It then passes through the collimator CLM. Since the polarization of the reflected light is now opposed (shifted by 180 degrees) to that of the "incoming" light beams from the laser LS, it is not mirrored back towards the laser LS by the polarized beam splitter PBS but passes through the polarized beam splitter PBS. Thus reflected light, indicated by RFL, is focused on the light-sensitive photodiodes PHDS. The photodiodes PHDS respond to this light by generating electrical currents which comprise the data read from the disk DSK, which data can be retrieved after demodulation of the HF-signal(s) delivered by the photodiodes PHDS, said signal(s) compring information needed for focus control and for (3-spot) push-pull tracking control.

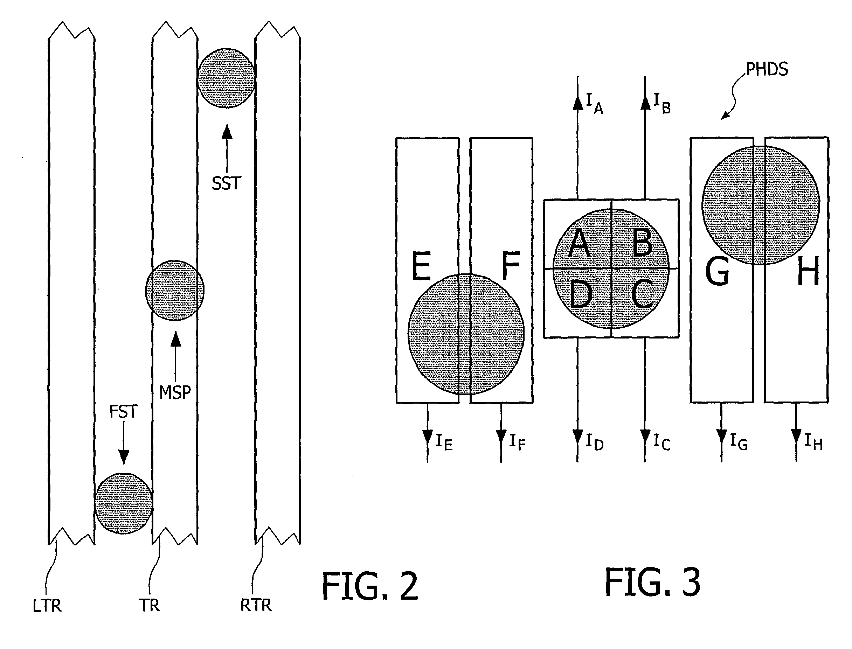

Figure 2 shows part of tracks irradiated by a main light spot and two satellite light spots. The main light spot MSP is focused on track TR, while a first satellite light spot FST is incident between a left track LTR and the track TR and a second satellite light spot SST is incident between the track TR and a right track RTR. In the situation shown, there is an ideal push-pull tracking, and the reflected light RFL (see Figure 1) hits the photodiodes PHDS in the way indicated in Figure 3. (This is under the assumption that in the manufacturing process the position/angles of the photodiodes are calibrated during a so-called test mode phase.) Temporarily the spots MSP, FST, and SST may be shifte, for example, towards the left. Then, however, a main part A-B of the photodiodes PHDS which receives light corresponding to the main light spot MSP will also shift, and consequently the electrical signals I_{A} - I_{B} will change. The same holds for the first E,F and second G,H satellite parts of the photodiodes PHDS, which receive light corresponding to the first FST and the second SST satellite light spots, respectively. In response to the changes in the electrical signals I_{A} - I_{H}, a push-pull tracking control (also often called servo control) changes the horizontal position of the laser beams focused on the disk DSK, for example by means of a so-called sledge (not shown in Figure 1) on which the OPU is mounted. Focus control and the retrieving of the code information can also be derived from the electrical currents I_{A} - I_{H}. Since the retrieving of the data, the focus control, and the push-pull control are well known techniques, a more detailed explanation of these techniques is not necessary.

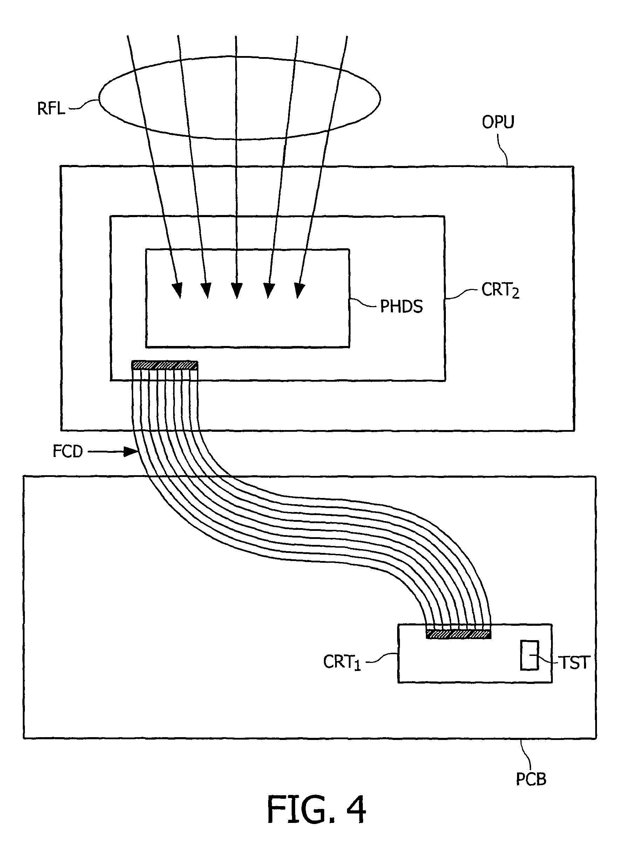

Figure 4 shows part of an optical disk drive. The optical disk drive comprises inter alia a PCB which comprises the major part of the electronics. Part of these electronics is indicated as a first electronic circuit CRT_{1.} The optical disk drive further comprises an OPU which comprises several mechanical components (not indicated in Figure 4) and some electronics indicated as a second electronic circuit (CRT₂. The second electronic circuit CRT₂ comprises the photodiodes PHDS (see also Figure 3) for receiving the reflected light RFL (see also Figure 1). The photodiodes PHDS deliver the electrical currents (see I_{A}-I_{H} in Figure 3). In the known disk drives, all these electrical currents are transferred via a flexible electrical connection device FCD to the first electronic circuit CRT₁. The first electronic circuit CRT₁ processes the electrical currents. Some currents are summed. In fact, this summation could already have been accomplished in the second electronic circuit CRT₂ so that a smaller number of electrical wires are needed in the flexible electrical connection device FCD. Up to now this has not been done because all electrical currents are separately needed in a test mode which is performed by a test circuit TST within the first electronic circuit.

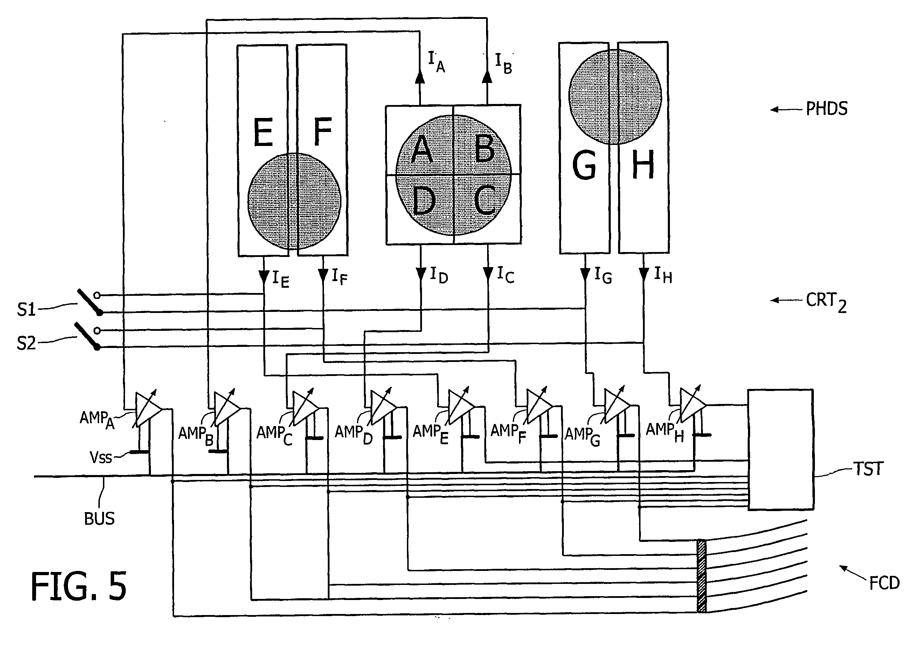

In the inventive embodiment as shown in Figure 5 the test circuit TST is part of the second electronic circuit CRT₂ instead of the first electronic circuit CRT₁ (and thus part of the OPU instead of the PCB). The test circuit TST is only active in the test mode, which is only used during the manufacture of the optical disk drive. In this test mode a position (including angles) of the photodiodes PHDS with respect to the reflected light from a disk DSK, is defined (calibration). The switches S₁ and S₂ are open (as indicated in Figure 5) in the test mode. As a consequence all the electrical currents I_{A} - I_{H} are separately amplified by the amplifiers AMP_{A} - AMP_{H}, and all output currents from the amplifiers AMP_{A} - AMP_{H} are separately coupled to the test circuit TST.

In the normal (user) mode, the test circuit TST is always inactive and the switches S₁ and S₂ are closed. Furthermore, the amplifiers AMP_{E} and AMP_{H} are also made inactive. This can be controlled via the bus system BUS. The closure of the switch S₁ adds the electrical current I_{E}, which can no longer be amplified by the amplifier AMP_{E}, to the electrical current I_{G}, so that the sum of these two currents is amplified by the amplifier AMP_{G}. The closure of the switch S₂ adds the electrical current I_{H}, which can no longer be amplified by the amplifier AMP_{H}, to the electrical current I_{F}, so that the sum of these two currents is amplified by the amplifier AMP_{F}. The outputs of the amplifiers, except for the amplifiers AMP_{E} and AMP_{H}, are coupled to the flexible electrical connection device FCD. So, in this example, only six electrical currents are transferred via the flexible electrical connection device FCD instead of eight in the known optical disc drives.

The bus system BUS delivers control bits for setting the gains of the amplifiers AMP_{A}-AMP_{H}. These gains can be set individually. The amplifiers AMP_{E} and AMP_{H} can be switched off in the normal mode via an extra control bit. This saves power. Instead of using the extra control bit it is also possible to temporarily increase/decrease the voltage/current of a control bit (used for setting a gain) to above/below a normal voltage/current value so as to indicate that the amplifiers AMP_{E} and AMP_{H} should be switched off. Instead of using a control bit it is also possible, for example, to temporarily decrease the voltage level on the V_{SS} power line of the opamps AMP_{A}-AMP_{H}.

Alternatively, the bus system BUS may use three-level logic control bits so that more information per control bit is available. Then both the gain setting signals and the switching-off signals for the opamps AMP_{A}-AMP_{H} can be delivered via the BUS-system without any increase in the number of control bits.

## Claims

1. An optical disk drive comprising an electronic unit (PCB) comprising a first electronic circuit (CRT₁); an optical pick-up unit (CPU) that is movably assembled with respect to the electronic unit (PCB) and comprises light generation means (LS) for writing/reading data to/from an optical disk (DSK), and comprising a second electronic circuit (CRT₂) having a plurality of light sensors (PHDS) for receiving reflected light (RFL) from the disk (DSK) which originates from the light generation means (LS), each light sensor having an output for delivering an electrical signal (I_{A} - I_{H}); and coupling means for coupling the second electronic circuit (CRT₂) to the first electronic circuit (CRT₁) for the transfer of information between the first (CRT₁) and second (CRT₂) electronic circuits, **characterized in that** in a normal operational mode a number of the electrical signals (I_{E},I_{G}; I_{F},I_{H}) are combined by the second electronic circuit (CRT₂), these combined electrical signals (I_{E},I_{G}; I_{F},I_{H}) and the remaining uncombined electrical signals (I_{A} -I_{D}) being transferred via the coupling means to the first electronic circuit (CRT₁), and that in a test mode all or part of the electrical signals are separately processed by the second electronic circuit (CRT₂).

2. An optical disk drive according to claim 1, **characterized in that** the second electronic circuit (CRT₂) comprises a plurality of amplifiers (AMP_{A} - AMP_{H}) each having an input separately coupled to the outputs of the light sensors in the test mode and each having an output, **in that** a number of the outputs of the amplifiers, which number equals the number of the combined and the remaining uncombined electrical signals in the normal operational mode, is separately coupled to the coupling means; and **in that** a number of the inputs of the amplifiers, which number equals the number of the combined electrical signals, is separately coupled to other inputs of the amplifiers in the normal operational mode.

3. An optical disk drive according to claim 1 or 2, **characterized in that** the coupling means are implemented by a flexible electrical connection device (FCD).

4. An optical disk drive according to claim 3, **characterized in that** the flexible electrical connection device (FCD) is a flexible printed circuit.

5. An optical disk drive according to any of the preceding claims, **characterized in that** during operation the light generation means (LS) generates a main light spot (MSP) and a first (FST) and a second (SST) satellite light spot, **in that** the plurality of light sensors (PHDS) is subdivided into a main part for receiving light which originates from the main light spot, a first satellite part for receiving light which originates from the first satellite light spot, and a second satellite part for receiving light which originates from the second satellite light spot, and **in that** the combined electrical signals (I_{E},I_{G}; I_{F},I_{H}) are combinations of electrical signals corresponding to the first and the second satellite parts of the light sensors.

6. An optical disk drive according to claim 5, **characterized in that** the main part comprises four sections (A, B, C, D) for delivering four of the electrical signals, further to be denoted the four main electrical signals (I_{A}, I_{B}, I_{C}, I_{D}), the first satellite part comprises two sections (E, F) for delivering two of the electrical signals not being the four main electrical signals (I_{A}, I_{B}, I_{C}, I_{D}), further to be denoted the two first satellite part electrical signals (I_{E}, IF), and the second satellite part comprises two sections (G, H) for delivering two of the electrical signals not being the four main electrical signals (I_{A}, I_{B}, I_{C}, I_{D}) or the two first satellite part electrical signals (I_{E}, I_{F}), further to be denoted the two second satellite part electrical signals (I_{G}, I_{H}), and **in that** in the normal operational mode at least one of the two first satellite part electrical signals (I_{E}, I_{F}) is combined with at least one of the two second satellite part electrical signals (I_{G}, I_{H}).

7. An optical disk drive according to claim 2, 3, 4, 5, or 6, **characterized in that** the second electronic circuit (CRT₂) comprises a BUS-system (BUS) for controlling the gain or gains of at least one of the amplifiers (AMP_{A} - AMP_{H}) by means of at least one control bit of the BUS-system (BUS), and **in that** additional information can be sent via the BUS-system (BUS) for switching off or putting into standby part of the amplifiers by the fact that the amplitude of the at least one control bit can be made greater than is necessary for controlling the gain or gains of at least one of the amplifiers.

8. An optical disk drive according to claim 7, **characterized in that** the BUS-system (BUS) uses a three-level logic.

9. An optical disk drive according to claim 2, 3, 4, 5, or 6, **characterized in that** the second electronic circuit (CRT₂) comprises a three-level logic BUS-system (BUS) for controlling the gain or gains of at least one of the amplifiers (AMP_{A} - AMP_{D}) by means of at least one control bit of the BUS-system (BUS) and for sending additional information via the BUS-system (BUS) for switching off or putting into standby part of the amplifiers.

10. An optical disk drive according to claim 7, 8, or 9, **characterized in that** at least one power supply line (V_{SS}) of the at least one amplifier (AMP_{A} - AMP_{D}) is also used for sending the additional information by temporarily increasing or decreasing the voltage level on the at least one power supply line (Vss).

11. A playback/recording apparatus comprising an optical disk drive as defined in any of the preceding claims.

## Patentansprüche

1. Optisches Plattenlaufwerk, welches umfasst: eine Elektronikeinheit (PCB), die eine erste elektronische Schaltung (CRT₁) umfasst; eine optische Abnahmeeinheit (OPU), welche bezüglich der Elektronikeinheit (PCB) beweglich montiert ist und Lichterzeugungsmittel (LS) zu Schreiben/Lesen von Daten auf eine/von einer optischen Platte (DSK) umfasst, und welche eine zweite elektronische Schaltung (CRT₂) umfasst, welche mehrere Lichtsensoren (PHDS) zum Empfangen von reflektiertem Licht (RFL) von der Platte (DSK), welches von den Lichterzeugungsmitteln (LS) stammt, aufweist, wobei jeder Lichtsensor einen Ausgang zum Liefern eines elektrischen Signals (I_{A} - I_{H}) aufweist; und Verbindungsmittel zum Verbinden der zweiten elektronischen Schaltung (CRT₂) mit der ersten elektronischen Schaltung (CRT₁) für die Übertragung von Informationen zwischen der ersten (CRT₁) und der zweiten (CRT₂) elektronischen Schaltung, **dadurch gekennzeichnet, dass** in einer normalen Betriebsart eine Anzahl der elektrischen Signale (I_{E}, I_{G}, I_{F}, I_{H}) durch die zweite elektronische Schaltung (CRT₂) kombiniert wird, wobei diese kombinierten elektrischen Signale (I_{E}, I_{G}; I_{F}, I_{H}) und die verbleibenden unkombinierten elektrischen Signale (I_{A} - I_{D}) über die Verbindungsmittel zu der ersten elektronischen Schaltung (CRT₁) übertragen werden, und dass in einer Testbetriebsart alle elektrischen Signale oder ein Teil von ihnen durch die zweite elektronische Schaltung (CRT₂) getrennt verarbeitet werden bzw. wird.

2. Optisches Plattenlaufwerk nach Anspruch 1, **dadurch gekennzeichnet, dass** die zweite elektronische Schaltung (CRT₂) mehrere Verstärker (AMP_{A} - AMP_{H}) umfasst, die jeweils einen Eingang aufweisen, der in der Testbetriebsart separat mit den Ausgängen der Lichtsensoren verbunden ist, und die jeweils einen Ausgang aufweisen, **dadurch**, dass eine Anzahl der Ausgänge der Verstärker, wobei diese Anzahl gleich der Anzahl der kombinierten und der verbleibenden unkombinierten elektrischen Signale in der normalen Betriebsart ist, separat mit den Verbindungsmitteln verbunden ist, und **dadurch**, dass eine Anzahl der Eingänge der Verstärker, wobei diese Anzahl gleich der Anzahl der kombinierten elektrischen Signale ist, in der normalen Betriebsart separat mit anderen Eingängen der Verstärker verbunden ist.

3. Optisches Plattenlaufwerk nach Anspruch 1 oder 2, **dadurch gekennzeichnet, dass** die Verbindungsmittel durch eine flexible elektrische Verbindungsvorrichtung (FCD) implementiert sind.

4. Optisches Plattenlaufwerk nach Anspruch 3, **dadurch gekennzeichnet, dass** die flexible elektrische Verbindungsvorrichtung (FCD) eine flexible Leiterplatte ist.

5. Optisches Plattenlaufwerk nach einem der vorhergehenden Ansprüche, **dadurch gekennzeichnet, dass** während des Betriebs die Lichterzeugungsmittel (LS) einen Hauptspot (MSP) und einen ersten (FST) und einen zweiten (SST) Satelliten-Spot erzeugen, **dadurch**, dass die mehreren Lichtsensoren (PHDS) unterteilt sind in einen Hauptteil zum Empfangen von Licht, welches von dem Hauptspot stammt, einen ersten Satellitenteil zum Empfangen von Licht, welches von dem ersten Satelliten-Spot stammt, und einen zweiten Satellitenteil zum Empfangen von Licht, welches von dem zweiten Satelliten-Spot stammt, und **dadurch**, dass die kombinierten elektrischen Signale (I_{E}, I_{G}; I_{F}, I_{H}) Kombinationen elektrischer Signale sind, die dem ersten und dem zweiten Satellitenteil der Lichtsensoren entsprechen.

6. Optisches Plattenlaufwerk nach Anspruch 5, **dadurch gekennzeichnet, dass** der Hauptteil vier Abschnitte (A, B, C, D) zum Liefern von vier der elektrischen Signale, die im Weiteren als die vier elektrischen Hauptsignale (I_{A}, I_{B}, I_{C}, I_{D}) bezeichnet werden, umfasst, der erste Satellitenteil zwei Abschnitte (E, F) zum Liefern von zweien der elektrischen Signale, die nicht die vier elektrischen Hauptsignale (I_{A}, I_{B}, I_{C}, I_{D}) sind und die im Weiteren als die zwei ersten elektrischen Satellitenteilsignale (I_{E}, I_{F}) bezeichnet werden, umfasst, und der zweite Satellitenteil zwei Abschnitte (G, H) zum Liefern von zweien der elektrischen Signale, die nicht die vier elektrischen Hauptsignale (I_{A}, I_{B}, I_{C}, I_{D}) oder die zwei ersten elektrischen Satellitenteilsignale (I_{E}, I_{F}) sind und die im Weiteren als die zwei zweiten elektrischen Satellitenteilsignale (I_{G}, I_{H}) bezeichnet werden, umfasst, und **dadurch**, dass in der normalen Betriebsart mindestens eines der zwei ersten elektrischen Satellitenteilsignale (I_{E}, I_{F}) mit mindestens einem der zwei zweiten elektrischen Satellitenteilsignale (I_{G}, I_{H}) kombiniert ist.

7. Optisches Plattenlaufwerk nach Anspruch 2, 3, 4, 5 oder 6, **dadurch gekennzeichnet, dass** die zweite elektronische Schaltung (CRT₂) ein BUS-System (BUS) zur Steuerung der Verstärkung oder Verstärkungen mindestens eines der Verstärker (AMP_{A} - AMP_{H}) mittels mindestens eines Steuerbits des BUS-Systems (BUS) umfasst, und **dadurch**, dass zusätzliche Informationen über das BUS-System (BUS) gesendet werden können, um einen Teil der Verstärker auszuschalten oder in einen Bereitschaftszustand (Standby) zu versetzen, aufgrund der Tatsache, dass die Amplitude des mindestens einen Steuerbits größer gemacht werden kann, als es notwendig ist, um die Verstärkung oder Verstärkungen mindestens eines der Verstärker zu steuern.

8. Optisches Plattenlaufwerk nach Anspruch 7, **dadurch gekennzeichnet, dass** das BUS-System (BUS) eine Drei-Pegel-Logik verwendet.

9. Optisches Plattenlaufwerk nach Anspruch 2, 3, 4, 5 oder 6, **dadurch gekennzeichnet, dass** die zweite elektronische Schaltung (CRT₂) ein BUS-System (BUS) mit einer Drei-Pegel-Logik zur Steuerung der Verstärkung oder Verstärkungen mindestens eines der Verstärker (AMP_{A} - AMP_{H}) mittels mindestens eines Steuerbits des BUS-Systems (BUS) und zum Senden zusätzlicher Informationen über das BUS-System (BUS) umfasst, um einen Teil der Verstärker auszuschalten oder in einen Bereitschaftszustand (Standby) zu versetzen.

10. Optisches Plattenlaufwerk nach Anspruch 7, 8 oder 9, **dadurch gekennzeichnet, dass** mindestens eine Stromversorgungsleitung (V_{SS}) des mindestens einen Verstärkers (AMP_{A} - AMP_{H}) außerdem verwendet wird, um die zusätzlichen Informationen durch eine zeitweilige Erhöhung oder Verringerung des Spannungspegels auf der mindestens einen Stromversorgungsleitung (V_{SS}) zu senden.

11. Wiedergabe-/Aufzeichnungsgerät, das ein optisches Plattenlaufwerk, wie in einem der vorhergehenden Ansprüche definiert, umfasst.

## Revendications

1. Unité de disque optique comprenant une unité électronique (PCB) comprenant un premier circuit électronique (CRT₁) ; une unité de capteur optique (OPU) qui est assemblée de manière à pouvoir se déplacer par rapport à l'unité électronique (PCB) et comprend un moyen générateur de lumière (LS) pour écrire des données et les lire sur un disque optique (DSK), et comprenant un second circuit électronique (CRT₂) ayant une pluralité de capteurs de lumière (PHDS) pour recevoir la lumière réfléchie (RFL) par le disque (DSK), qui provient du moyen générateur de lumière (LS), chaque capteur de lumière ayant une sortie pour délivrer un signal électrique (I_{A} - I_{H}) ; et des moyens de couplage pour coupler le second circuit électronique (CRT₂) au premier circuit électronique (CRT₁) pour le transfert d'informations entre les premier (CRT₁) et second (CRT₂) circuits électroniques, **caractérisée en ce qu'**en mode de fonctionnement normal, on combine un certain nombre de signaux électriques (I_{E}, I_{G} ; I_{F}, I_{H}) par le second circuit électronique (CRT₂), ces signaux électriques combinés (I_{E}, I_{G} ; I_{F}, I_{H}) et les signaux électriques combinés restants (I_{A}-I_{D}) étant transférés via les moyens de couplage au premier circuit électronique (CRT₁) et **en ce qu'**en mode d'essai, la totalité ou une partie des signaux électriques sont traités séparément par le second circuit électronique (CRT₂).

2. Unité de disque optique selon la revendication 1, **caractérisée en ce que** le second circuit électronique (CRT₂) comprend une pluralité d'amplificateurs (AMP_{A} - AMP_{H}), ayant chacun une entrée couplée séparément aux sorties des capteurs de lumière en mode d'essai et ayant chacun une sortie, **en ce qu'**un certain nombre des sorties des amplificateurs, lequel nombre est égal au nombre des signaux électriques combinés et non combinés restants en mode de fonctionnement normal, sont couplées séparément aux moyens de couplage ; et **en ce qu'**un certain nombre des entrées des amplificateurs, lequel nombre est égal au nombre des signaux électriques combinés, sont couplées séparément aux autres entrées des amplificateurs en mode de fonctionnement normal.

3. Unité de disque optique selon la revendication 1 ou 2, **caractérisée en ce que** les moyens de couplage sont implémentés par un dispositif de connexion électrique flexible (FCD).

4. Unité de disque optique selon la revendication 3, **caractérisée en ce que** le dispositif de connexion électrique flexible (FCD) est un circuit imprimé flexible.

5. Unité de disque optique selon l'une quelconque des revendications précédentes, **caractérisée en ce que**, en cours de fonctionnement, le moyen générateur de lumière (LS) génère un spot lumineux principal (MSP) et des premier (FST) et second (SST) spots lumineux satellites, **en ce que** la pluralité de capteurs de lumière (PHDS) est subdivisée en une partie principale pour recevoir la lumière qui provient du spot lumineux principal, en une première partie satellite pour recevoir la lumière qui provient du premier spot lumineux satellite et en une seconde partie satellite pour recevoir la lumière qui provient du second spot lumineux satellite, et **en ce que** les signaux électriques combinés (I_{E}, I_{G}; I_{F}, I_{H}) sont des combinaisons de signaux électriques correspondant aux première et seconde parties satellites des capteurs de lumière.

6. Unité de disque optique selon la revendication 5, **caractérisée en ce que** la partie principale comprend quatre sections (A, B, C, D) pour délivrer quatre des signaux électriques, que l'on désignera par la suite par les quatre signaux électriques principaux (I_{A}, I_{B}, I_{C}, I_{D}), la première partie satellite comprend deux sections (E, F) pour délivrer deux des signaux électriques qui ne sont pas les quatre signaux électriques principaux (I_{A}, I_{B}, I_{C}, I_{D}), que l'on désignera par la suite par les deux signaux électriques (I_{E}, I_{F}) de la première partie satellite, et la seconde partie satellite comprend deux sections (G, H) pour délivrer deux des signaux électriques qui ne sont pas les quatre signaux électriques principaux (I_{A}, I_{B}, I_{C}, I_{D}) ou les deux premiers signaux électriques (I_{E}, I_{F}) de la première partie satellite, encore désignés par les deux seconds signaux électriques (I_{G}, I_{H}) de la seconde partie satellite, et **en ce qu'**en mode de fonctionnement normal, au moins l'un des deux signaux électriques (I_{E}, I_{F}) de la première partie satellite est combiné à au moins l'un des deux signaux électriques (I_{G}, I_{H}) de la seconde partie satellite.

7. Unité de disque optique selon la revendication 2, 3, 4, 5 ou 6, **caractérisée en ce que** le second circuit électronique (CRT₂) comprend un système BUS (BUS) pour commander le ou les gains d'au moins l'un des amplificateurs (AMP_{A} - AMP_{H}) à l'aide d'au moins un bit de commande du système BUS (BUS), et **en ce que** des informations supplémentaires peuvent être envoyées via le système BUS (BUS) pour déconnecter ou mettre en veille une partie des amplificateurs du fait que l'amplitude du au moins un bit de commande peut être augmentée plus que nécessaire pour commander le ou les gains d'au moins l'un des amplificateurs.

8. Unité de disque optique selon la revendication 7, **caractérisée en ce que** le système BUS (BUS) utilise une logique à trois niveaux.

9. Unité de disque optique selon la revendication 2, 3, 4, 5 ou 6, **caractérisée en ce que** le second circuit électronique (CRT₂) comprend un système BUS (BUS) de logique à trois niveaux pour commander le ou les gains d'au moins l'un des amplificateurs (AMP_{A} - AMP_{D}) à l'aide d'au moins un bit de commande du système BUS (BUS) et pour envoyer des informations supplémentaires via le système BUS (BUS) afin de déconnecter ou de mettre en veille une partie des amplificateurs.

10. Unité de disque optique selon la revendication 7, 8 ou 9, **caractérisée en ce qu'**au moins une ligne d'alimentation en courant (V_{SS}) du au moins un amplificateur (AMP_{A} - AMP_{D}) est également utilisée pour envoyer les informations supplémentaires en augmentant ou en réduisant temporairement le niveau de tension sur la au moins une ligne d'alimentation en courant (V_{SS}).

11. Appareil de lecture/enregistrement comprenant une unité de disque optique telle que définie dans l'une quelconque des revendications précédentes.
